# EUROPEAN PATENT SPECIFICATION

(11) **EP 4 322 466 B1**
(45) Date of publication and mention of the grant of the patent: **12.03.2025**
(21) Application number: 23190384.0
(22) Date of filing: 08.08.2023
(51) Int. Cl.: H04L 9/14, H04L 25/03, H04L 9/40, H04W 12/03, H04W 12/033, H04W 12/02, H04W 84/12, H04L 9/08

(54) **TECHNIQUES FOR TRANSMITTING FRAMES WITH SECURELY SCRAMBLED PAYLOAD**
VERFAHREN ZUR ÜBERTRAGUNG VON RAHMEN MIT SICHER VERSCHLÜSSELTER NUTZLAST
TECHNIQUES DE TRANSMISSION DE TRAMES À CHARGE UTILE BROUILLÉE DE MANIÈRE SÉCURISÉE

(30) Priority: 08.08.2022 US 202263396217 P
(43) Date of publication of application: 14.02.2024
(73) Proprietor: Apple Inc., Cupertino, CA 95014 (US)
(72) Inventor: KNECKT, Jarkko L., Cupertino, CA, 95014 (US); DASH, Debashis, Cupertino, CA, 95014 (US); BRIGGS, Elliot S., Cupertino, CA, 95014 (US); REUVEN, Nisan, Cupertino, CA, 95014 (US); WANG, Qi, Cupertino, CA, 95014 (US); THAKUR, Sidharth R., Cupertino, CA, 95014 (US); YONG, Su Khiong, Cupertino, CA, 95014 (US); LIU, Yong, Cupertino, CA, 95014 (US); WU, Tianyu, Cupertino, CA, 95014 (US)
(74) Representative: Lang, Johannes

(56) References cited:
- CN-A- 102 469 344
- CN-A- 109 151 486
- US-A1- 2016 255 054

## Description

### FIELD

This application relates to the field of networks and, in particular, to techniques for transmitting frames with securely scrambled payload in said networks.

### BACKGROUND

A wireless network is a communication network that enables computing devices to communicate through radio transmissions and receptions between network nodes. These wireless networks permit users with greater mobility within the home and office environments by untethering their computing device from wired communication.

The prior art document US 2016/0255054 A1 discloses a packet obfuscation method comprising receiving a data packet having a routing header portion and a payload portion, performing a first obfuscation on the routing header portion to generate an obfuscated routing header portion, performing a second obfuscation on at least the payload portion to generate an obfuscated payload portion, and combining the obfuscated routing header portion and the obfuscated payload portion to form an obfuscated packet.

### BRIEF DESCRIPTION OF THE DRAWINGS

Figure 1 is an example illustration of an access point (AP) and station (STA) environment, according to one or more embodiments.
Figure 2 is an example illustration of service field, according to one or more embodiments.
Figure 3 is an example illustration of a time-based value change process, according to one or more embodiments.
Figure 4 is an example table of randomizable identifiers, according to one or more embodiments.
Figure 5 is an example table for secure scrambling capability signaling, according to one or more embodiments.
Figure 6 is an example signaling diagram for associating with an AP, according to one or more embodiments.
Figure 7 is an example illustration of a capability field for the beacon frame, probe response, association request, and association response frames and neighbor report element, according to one or more embodiments.
Figure 8 is an example signaling diagram for association, according to one or more embodiments.
Figure 9 is an example table for signaling for common AP or STA keys based on PPDU type, according to one or more embodiments.
Figure 10 is an example illustration of a secure scrambler, according to one or more embodiments.
Figure 11 is an example table for the number of keys in secure scrambling, according to one or more embodiments.
Figure 12 is an example illustration for secure scrambling offsets of UL SU, according to one or more embodiments.
Figure 13 is an example illustration for secure scrambling offsets of DL SU, according to one or more embodiments.
Figure 14 is an example illustration for secure scrambling offsets in neighborhood area network (NAN)/Mesh networks, according to one or more embodiments.
Figure 15 is an example illustration for secure scrambling offset for MU PPDU, according to one or more embodiments.
Figure 16 is an example illustration of using MU PPDU for UL transmissions, according to one or more embodiments.
Figure 17 is an example illustration for secure scrambling offsets of triggered PPDU. According to one or more embodiments.
Figure 18 is an example illustration for secure scrambling offsets of triggered PPDU, according to one or more embodiments.
Figure 19 is an example table for example configurations of the scrambling keys, according to one or more embodiments.
Figure 20 is an example process flow for MAC header offset handling at a transmitting device, according to one or more embodiments.
Figure 21 is an example process flow for MAC header offset handling at a receiving device, according to one or more embodiments.
Figure 22 is an example illustration for secure scrambling offsets of triggered PPDU, according to one or more embodiments.

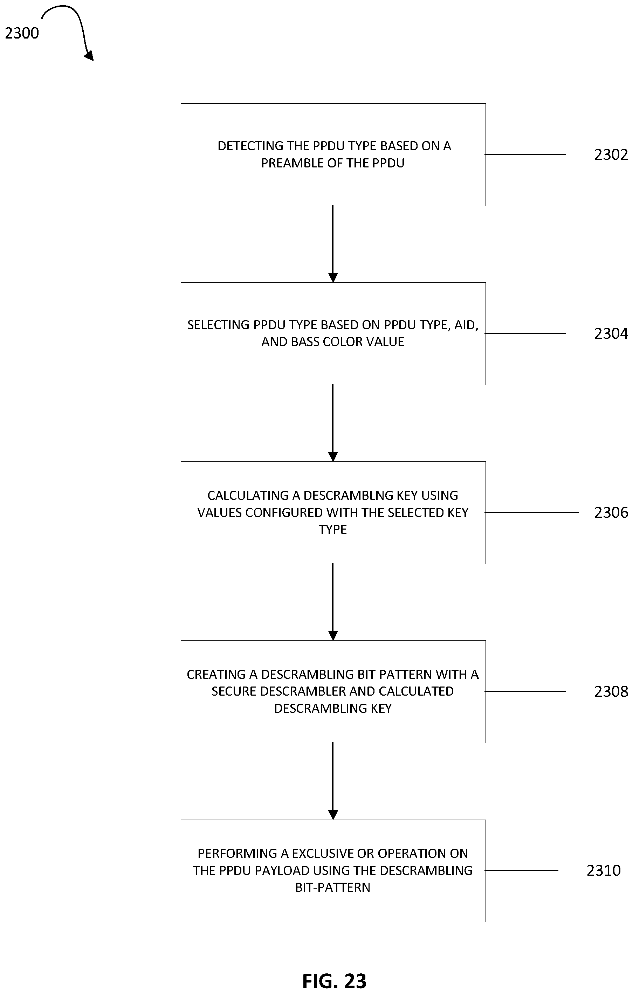

Figure 23 is a process flow for secure scrambling, according to one or more embodiments.

### DETAILED DESCRIPTION

The present invention is described in the independent claims. Preferred embodiments are provided by the dependent claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims. In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

In a wireless communication network, a frame is a unit of data that is transmitted between nodes. The frame can include information useful to transmit data from one network node to another, including addressing information and protocol control information. A frame can include a header, a payload and a trailer. Each of the header, payload, and trailer can be configured to convey particular information. For example, a medium access control (MAC) header can be an ethernet header that includes data fields that are added to a beginning of a network data packet to convert the packet into a frame to be transmitted. The MAC header can be part of a payload and include various elements such as a transmission protocol version, a frame type, a frame subtype, and a frame control flag. To address privacy concerns, certain parts of a frame can be encrypted to secure the frame's contents. Under IEEE standard 802.11, only the payload of the frame is encrypted, and therefore and header and trailer remain unencrypted.

The encryption can be performed by a scrambler (e.g., a device that can encode a message by transposing or inverting a signal in the analog domain). A computing device (e.g., a transmitting device configured to transmit frames or other data) can encode a message using the scrambler, such that the signal cannot be decoded by a second device (e.g., a receiving device configured to receive the frames) unless the receiving device has the proper descrambling device. Scramblers can create a pseudorandom bitstream by using a scrambler seed, which is a number used to initialize a pseudorandom number generator. In many instances, the scrambler uses service field bits as the scrambler seed. The current convention calls for the use of the first seven bits of the service field to be used as the scrambler seed. The seven bits can be randomized to result in one hundred and twenty-seven possible scrambler seeds. A receiving device can be configured to know the scrambler seed and the scrambler function to permit the receiving device to decode the transmission. However, with one hundred and twenty-seven possibilities and a common scrambler function, a malicious actor can brute force try each possible scrambler seed to intercept a communication.

The embodiments described herein relate to a methodology for obfuscating a physical layer protocol data unit (PPDU) payload (e.g., control frame, data frame, management frame, aggregation of multiple data frames, and aggregation of data and management frames) by defining a secure scrambler. The secure scramble can use additional bits (e.g., greater than seven) to generate a scrambler seed. For example, rather than using a 7-bit scrambler seed, the secure scrambler can use a 2, 4, 6, or 8 octet scrambler seed. Other embodiments are directed to a secured scrambler that can further use an offset to further add to the complexity of the scrambler seed. Furthermore, the secure scrambler can use various methods to calculate the scrambler seed. For example, for one method the secure scrambler can calculate the scrambler seed using a hashing function (e.g., SHA-256). An alternative method, the secure scrambler can apply a Boolean logic operation on the scrambler seed and scrambler offset (e.g., OTA/Scrambler_seed XOR Scrambler_offset).

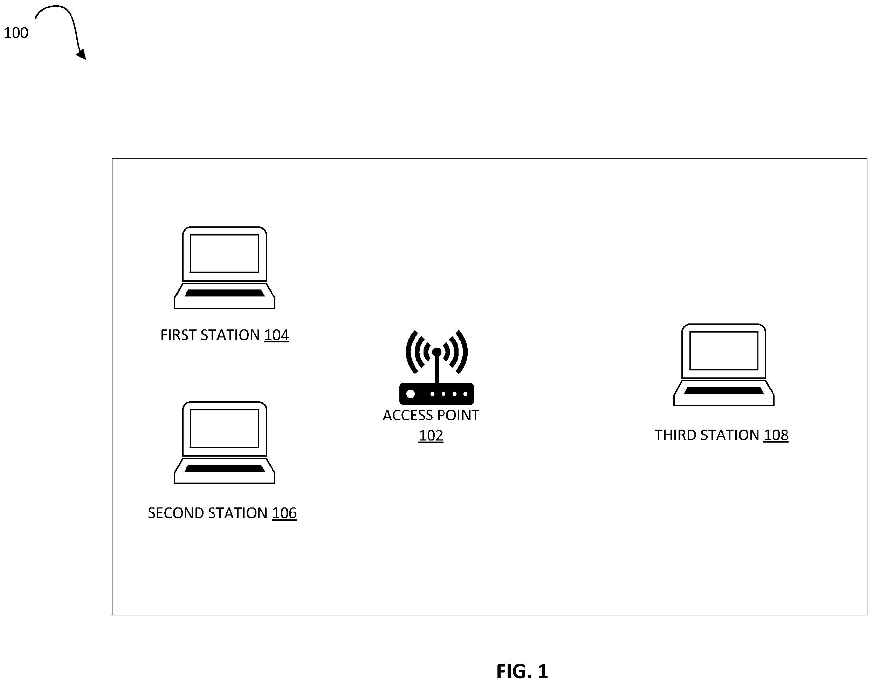

Figure 1 is an environment 100 with an access point (AP) and several computing devices (also called stations (STAs)), according to one or more embodiments. The environment 100 includes an AP 102, a first station 104, a second station 106, and a third station 108. The AP can be a device that can create a wireless local area network (WLAN) in the environment. The AP can connect to a wired router, switch, or hub via an Ethernet cable, and project a Wi-Fi signal to the environment 100 (e.g., home or office). Each of the first station 104, the second station 106, and the third station 108 can be a device that has access to the Wi-Fi and can allow transmission and reception of data. Thus, both of the ends of the data sharing process (transmission and reception) can be performed by a station. One station can be from where data is transmitted, and another station can be where the data is received. Various techniques can be implemented to secure the privacy of communications in the environment 100. Embodiments described herein relate to one or more of these techniques.

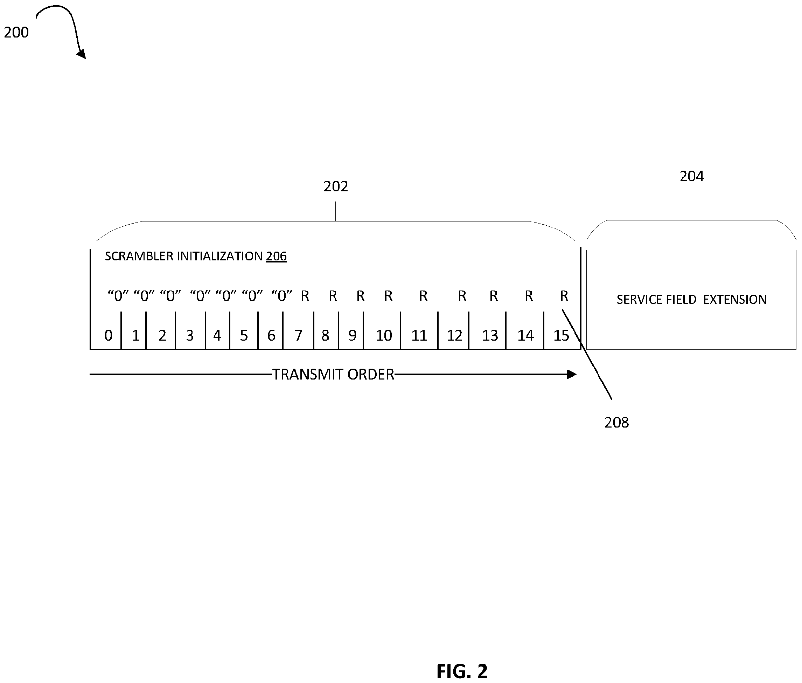

Figure 2 is an illustration 200 of a scrambler seed extension operation, according to one or more embodiments. Figure 2 includes a service field 202 followed by a service field extension 204. The service field 202 can follow a frame preamble and precede a frame payload. The service field 202 can include scrambler initialization bits 206 and reserve service bits 208. The reserve service bits 208 can indicate a bandwidth or other vendor specific value. As described above, a scrambler can use the seven scrambler initialization bits to generate a scrambler seed. The scrambler can use the seven bits (e.g., short PPDU number) as a salt for obfuscating the MAC header included in the payload. In some instances, the salt is a value used as an input for a one-way hashing function.

As also described above, a secure scrambler can receive a scrambler seed that is equal to seven bits or can be greater than seven bits. This is similar to the process of using a packet number (PN) to encrypt the payload of a MAC protocol data unit (MDPU). For example, for legacy IEEE 802.11 payload encryption, a six-octet long PN is used as salt. To increase the number of bits, the service field extension 204 is introduced. The service field extension 204 can be located after the service field 202 and before a payload of a frame. By using the service field extension 204, the scrambler seed can be extended to 2, 4, 6, or 8 octets (e.g., long PPDU number). The total length of the long PPDU number can be 2 octets, 4 octets, 6 octets, or 8 octets. In some instances, the scrambler initialization 216 can be used for improving scrambling. For example, in instances that the PPDU number would create a randomization with poor transmission characteristics, the scrambler initialization 216 can be added to the secure scrambler.

As indicated above, in some embodiments a device can add a service field extension 204 to generate a long PPDU number. Therefore, a receiving device can be configured to know if the service field extension 204 has been added to detect where the payload begins in a frame. The receiving device can have a mechanism for determining the starting bit of the payload. In some embodiments, the IEEE 802.11 specification can be amended to include the lengths of the fields. In other embodiments, the transmitting device and the receiving device can agree on the length during an association process. In some embodiments, the length can be based on the PPDU type. Each PPDU type can be associated with a particular preamble, which can be located in front of the service field in the frame. Therefore, by reading the preamble, the receiving device can determine the PPDU type. If the receiving device determines that the PPDU type is either a legacy single user (SU) PPDU or a high efficiency (HE) SU PPDU, the receiving device can determine that the service field extension has not been added and that frame includes the short PPDU number. If, however, the receiving device reads the preamble and the PPDU type is a multiple user (MU) PPDU or a trigger based (TB) PPDU, then the receiving device can determine that the service field extension has been added and the frame includes the long PPDU number.

If the transmitting device and receiving device are included in a basic service set (BSS) that includes legacy STAs, then the receiving device can determine that legacy SU PPDUs are configured to use legacy scrambling (e.g., short PPDU number). The BSS can be a network topology of devices that share the same physical layer medium access characteristics (e.g., radio frequency, modulation scheme, security settings). In other embodiments, if the BSS is in communication with an overlapping basic service sets (OBSS) that includes legacy STAs, the receiving device can determine that the legacy SU PPDUs can be configured to use legacy scrambling. The legacy PPDUs can carry control frames (request to send (RTS), clear to send (CTS), a trigger, block acknowledgment request (BAR), block acknowledgment (BA)) that set the network allocation vector (NAV) for the STAs. Group frames can be transmitted in legacy SU PPDUs, or in an resource unit (RU) of an MU PPDU that has AID value set to value 0 if the group addressed frames in RU are targeted for associated STAs, that are not receiving RU allocated with their own AID, value 2045 if the RU carries information for non-associated STAs, or to value 2047 if the AP is multiple BSSID (MBSSID) and the RU carries group data that is targeted for STAs not associated with the transmit BSS . The MU PPDUs and the TB PPDUs can carry an association identifier (AID) value in the preamble, where the AID can identify a target receiving device, or target receiving devices for the group data. Therefore, in some instances, the transmitting device can use the short PPDU number or the long PPDU number based on the target receiving device (e.g., STA specific, or AID value specific). An SU PPDU (e.g., single transmitting device to single receiving device) that carries a control frame and is not carrying a block acknowledgment (ACK) can use the short PPDU number. Therefore, a receiving device that is receiving the SU PPDU can determine that the short PPDU number has been used. Each of these methods permits the receiving device to determine the beginning of the payload in the frame.

In some instances, the preamble can include a bit to signal to a receiving device whether the service field extension is present. The position of the bit in the frame can depend on the preamble variant (e.g., PPDU type). For example, referring back to Figure 2, a last bit 210 f the service field 202 (e.g., B15) can be set to 1 if the service field extension is present. Therefore, a receiving device can read the last bit to determine whether the service field extension has been added and the beginning of the payload. In some instances, a receiving device can calculate the legacy scrambling short field and long service field used to obtain the duration/ID field of the MAC header. This enables the receiving device to set the NAV for OBSS transmissions. Furthermore, the AP can receive transmissions from non-associated STAs that use legacy scrambling. For example, if an AP access point triggers a data frame on a wireless channel, the duration ID in the frame has a value in microseconds. This time value can be the amount of airtime the transmitting device is reserving for the pending acknowledgment frame. A receiving device that can demodulate the data frame can use the time value in a NAV calculation.

The PPDU number (short PPDU number or long PPDU number) may not be a static number and can change to secure any transmissions between devices. In instances that the secure scrambler uses the PPDU number as a salt for secure scrambling, the value of the PPDU number can be incremented (e.g., by one) for each successive transmitted data packet. The starting PPDU number can be any random value, whereupon the random value can be incremented for each successive data packet. In some instances, the PPDU number is scrambling key specific. In other words, in an environment with multiple secure scramblers, each scrambling key can be associated with a different PPDU number for scrambling purposes. In other instances, each secure scrambler can use the same PPDU number for salt for a hashing function. It should be appreciated that legacy scramblers can continue to use a scrambler seed without any modifications. In the instance that a receiving device is communicating with a transmitting device using a secure scrambler and the PPDU number is being incremented, the receiving device can verify that the PPDU has been incremented. If the receiving device receives a transmission, in which the PPDU number is smaller than a previous transmission, the receiving device can drop the PPDU, and its values can be discarded. It should be appreciated that in instances that the PPDU is scrambler key specific, the receiving device can check the PPDU value on a per key basis.

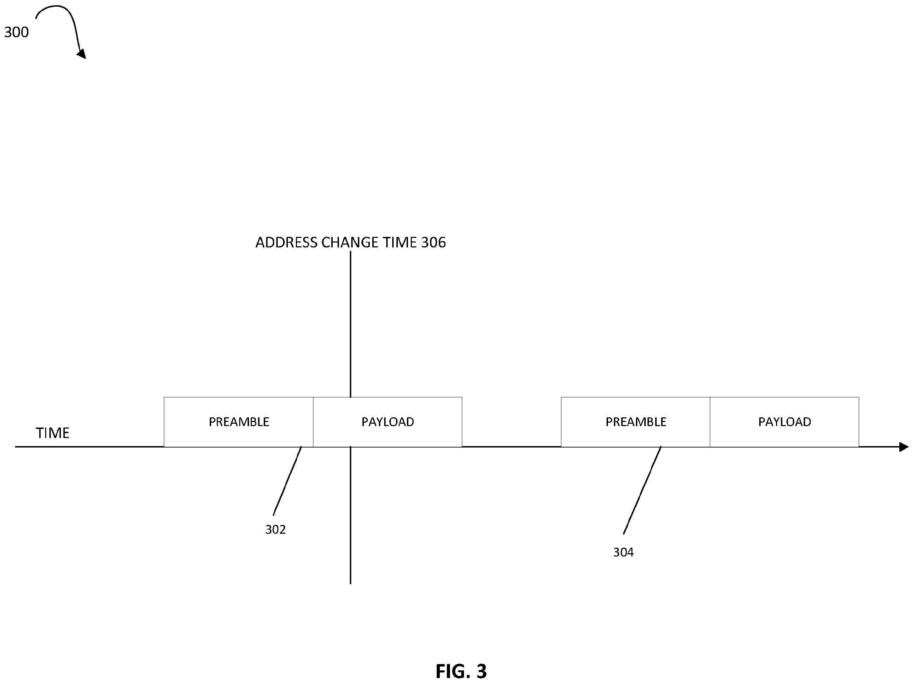

Figure 3 is an illustration 300 of a time-based value change process, according to one or more embodiments. As described above, the herein described values (e.g., AID and PPDU number, OTA scrambler offset) are not static and can change over time. These values can be changed from time to time to make device tracking more difficult. A schedule for changing the values can be determined during the time one device is associated with another device. For example, a first device and a second device can both be configured to store the same equation to calculate a next change time and the new value (e.g., AID and PPDU number). A receiver may compare the AID and the PPDU number values of the received PPDU to the calculated offset values. If the received values match with the calculated values, the receiver may continue to receive the PPDU payload, otherwise the receiver may discard the PPDU. In the instance, that a secure scrambler is used, a new AID value and salt value can be taken for use at a next transmission opportunity (TXOP), which defines the time duration for which a device can send frames after it has gained contention for the transmission medium. Referring to Figure 3, it can be seen that within a single TXOP, the same values are maintained regardless of a change time. A first transmission 302 can be followed by a second transmission 304, wherein each transmission includes a preamble and a payload. The first transmission 302 can occur based on a first TXOP and the second transmission 304 be set to occur based on a second TXOP, subsequent to the first TXOP. This complicates eavesdroppers to map the old values to the new changed values. Also, the receiver has clear rule which values it should use to determine whether it receives the frame. The determined address change time 306 can occur during the time that a device is transmitting the first transmission 302. In this event, the device can hold the AID value and the OTA scrambler offset even though the address change time 306 has passed. The second transmission 304 has yet to occur and the address change time 306 has passed before the second transmission begins. Therefore, the device can change the AID value and the OTA scrambler offset, based on the passing of the address change time 306.

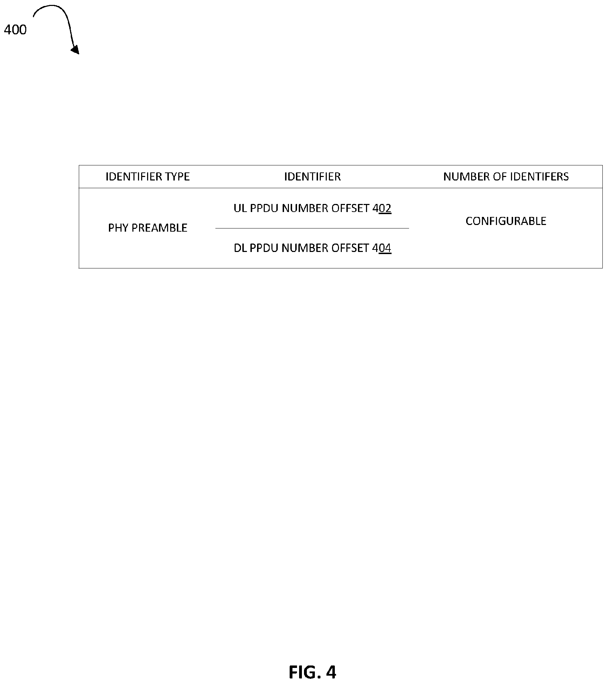

Figure 4 is a table 400 of randomized identifiers for OTA address set randomization, according to one or more embodiments. The table 400 includes randomized identifiers in individually addressed frames. To enable security communications, randomizing STA OTA MAC addresses can be insufficient if a malicious device can track client privacy enhancements (CPE) STA based on a scrambler seed, sequence number (SN) and PN values. For secure communication, both UL and DL unicast frames parameters can be changed as a MAC address is changed. Embodiments herein propose two identifiers of the physical layer (PHY) header. Figure 4 displays these two new identifiers, a UL PPDU number offset 402 and a DL PPDU number offset 404 to be changed as a MAC address changes. Changing the offset values for UL and DL transmissions hinders the malicious device from tracking and intercepting the communications.

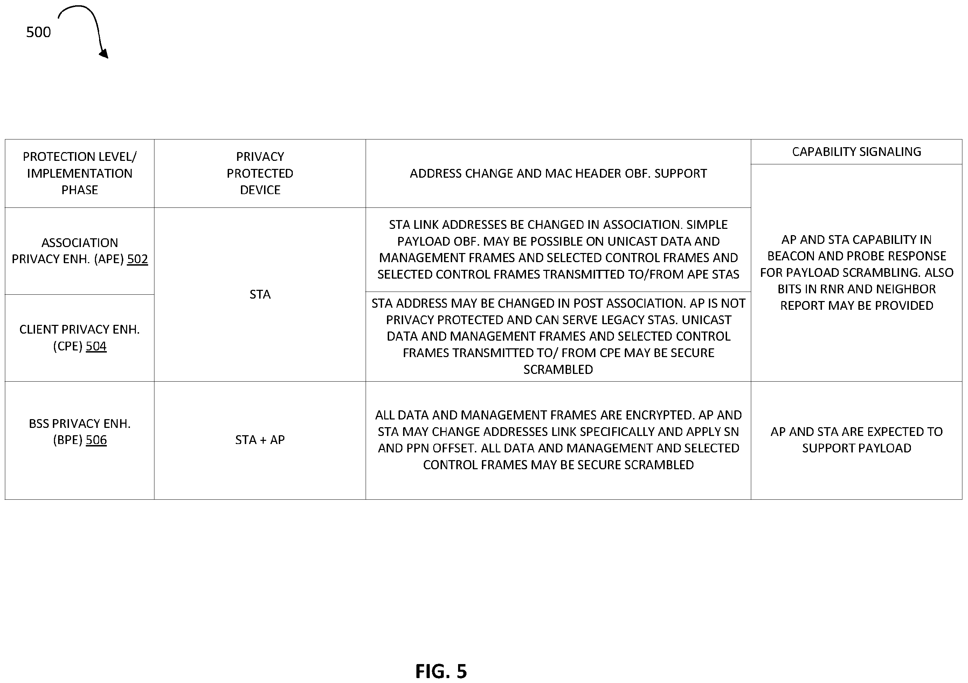

Figure 5 is a table 500 describing secure scrambling capability signaling, according to one or more embodiments. A first device can signal its capabilities during a probe and beacon response. For example, the capability can be signaled via bits in a capability field. A wireless local area network (WLAN) client or second device can use a probe request frame to transmit a request. To support capability signaling one octet long capability can be added to a frame. The capabilities can be based on device protection levels, including associated privacy enhancement (APE) 502, and client privacy enhancement (CPE) 504, which can both apply to a STA. Additionally, BSS privacy enhancement (BPE) 506, which can apply for a first device and second device. For APE 502, the capabilities can include that the link addresses can be changed during an association procedure. Additionally, a payload obfuscation can be possible on unicast data and management frames, and selected control frames transmitted to/from devices that support APE. For CPE 504, the capabilities can include that device's addresses can be changed in post association. Unicast data and management frames and, selected control frames that are transmitted to/from CPE STAs can be secure scrambled. For APE 502 and CPE 504, a first device and a second device can have capability in beacon and probe response for payload scrambling. Additionally, the bits in a reduced neighbor report (RNR) element and Neighbor Report element can be provided, where fields of each report can be used for initial discovery of multi-band devices using scanning. For the BPE 506, all data and management frames can be encrypted. An first device and a second device can change an addresses link specifically and apply SN and PN offsets. All data and management and selected control frames can be secure scrambled, For BPE 506, an a first device and a second device can be expected to support payload scrambling.

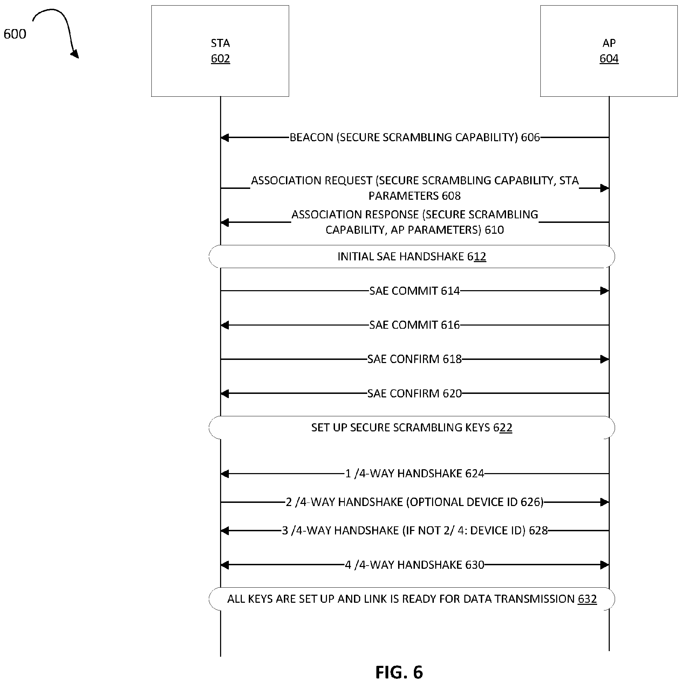

Figure 6 is a process flow 600 for associating with an AP, according to one or more embodiment. As illustrated, a STA 602 can be in operable communication with an AP 604. While the operations of processes 600, 800, 2000 and 2100 are described as being performed by generic computers, it should be understood that any suitable device may be used to perform one or more operations of these processes. Processes 600, 800, 2000 and 2100 (described below) are respectively illustrated as logical flow diagrams, each operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform functions or implement data types. The order in which the operations are described is not intended to be construed as a limitation, and any number of the described operations can be combined in any order and/or in parallel to implement the processes.

A four-way handshake can be a network authentication protocol established by IEEE-802.11(i) for the construction and use of wireless local area networks (WLANs). The four-way handshake can provide a secure authentication strategy for data delivered between the STA 602 and the AP 604. At 606, the AP 604 can transmit a beacon frame to the STA 602 announcing that it has secure scrambling capability. At 608, the STA 602 can transmit an association request to the AP 602. The request can include the STA's secure scrambling capability information and STA parameters. At 610, the AP 604 can transmit an association response to the STA 602. The response can include the AP's secure scrambling capability and AP parameters.

At 616, the STA 602 and the AP 604 can then enter an initial simultaneous authentication of equals (SAE) handshake phase. At 614, the AP 602 can transmit a first authentication frame that includes an SAE commit to the STA 602. At 616, the STA 602 can transmit a second authentication frame that includes an SAE commit to the AP 604. At 618, the AP 604 can transmit a third authentication frame that includes an SAE confirm to the AP 602. At 620, the AP 602 can transmit a fourth authentication frame including an SAE confirm to the STA 602.

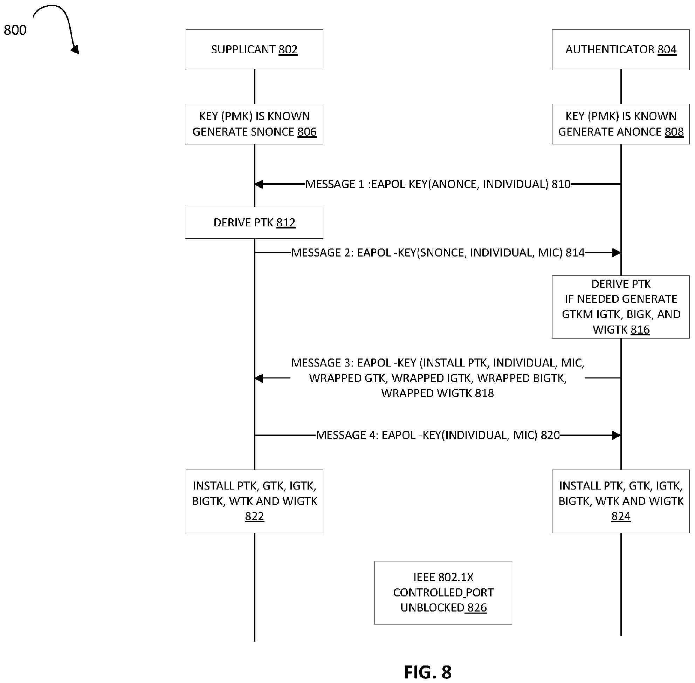

At 622, the STA 602 and the AP 604 can enter a set up secure scrambling keys phase. Steps 624- 630 of the four-way handshake are described with more detail with respect to Figure 8. At 624, the AP 604 can perform the first part of the handshake. At 626, the STA 602 can perform the second part of the handshake. At 628, the AP 604 can perform the third part of the handshake. At 630, the STA 602 can perform the fourth part of the handshake. At 632, the STA 602 and the AP can exchange configuration parameters, including all key information, and the link is ready for data transmission.

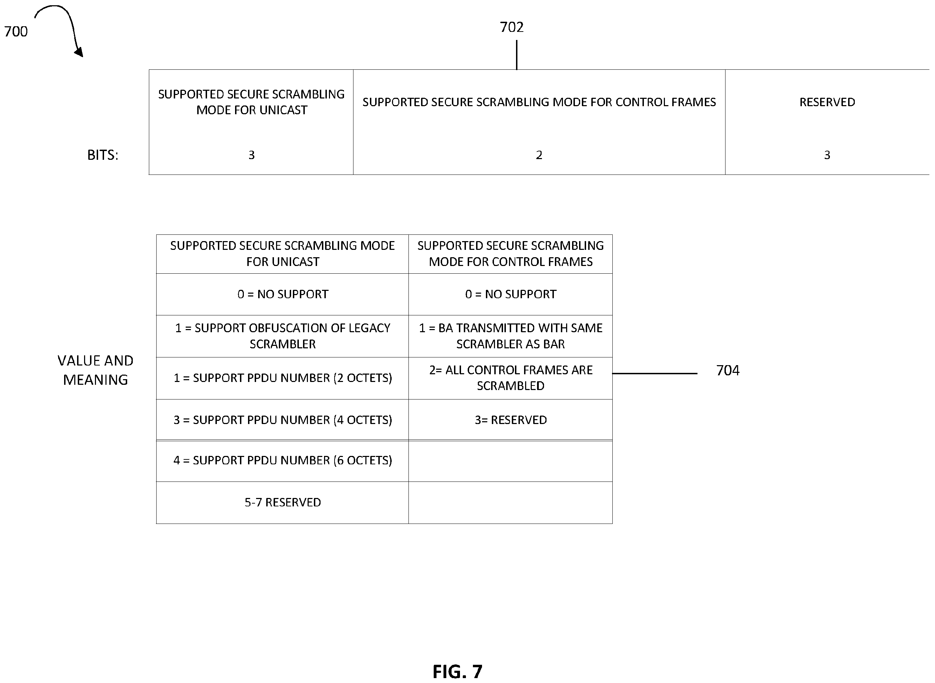

Figure 7 includes a set of tables 800 describing a capability field for the beacon frame, probe response, association request, and association response frames, and Neighbor report element, according to one or more embodiments. As indicated by the first table 802, a capability field can have three bits for indicating that a device support secure scrambling mode for a unicast transmission. two bits to indicate whether a device supports secure scrambling mode for control frames, and three bits reserved for later use. The second table 804 describes the values and meaning behind the values. If the three bits for secure scrambling mode for unicast have a value of 0 (e.g., 000), the device cannot support this capability. If the three bits for secure scrambling mode for unicast have a value of 1 (e.g., 001), the device can support obfuscation of legacy scrambler. If the three bits for secure scrambling mode for unicast have a value of 2 (e.g., 010), the device can support a 2 octet PPDU number. If the three bits for secure scrambling mode for unicast have a value of 3 (e.g., 011), the device can support a 4 octet PPDU number. If the three bits for secure scrambling mode for unicast have a value of 4 (e.g., 100), the device can support a 6 octet PPDU number. If the three bits for secure scrambling mode for unicast have a value of 5-7 (e.g., 011), the indication be reserved to be determined later.

If the two bits for secure scrambling mode for control frames have a value of 1 (e.g., 001), the device cannot support secure scrambling for control frames. If the two bits for secure scrambling mode for control frames have a value of 2 (e.g., 010), the device can transmit block acknowledgment (BA) with the scrambler as data or block acknowledgment request (BAR). If the two bits for secure scrambling mode for control frames have a value of 3 (e.g., 011), the indication be reserved to be determined later.

Figure 8 is signaling diagram 800 for a four-way handshake, according to one or more embodiments. As illustrated a supplicant 802 and an authenticator 804 are in operable communication. At 806, the supplicant 802 can generate an SNonce and a pairwise master key (PMK) can be known to the supplicant 802. At 808, the authenticator 804, can generate an ANonce and a pairwise master key (PMK) can be known to the authenticator 804. At 810 the authenticator 804 can send the supplicant 802 can send an extensible authentication protocol key (EAPOL-KEY) message including the ANonce to the supplicant 802. At 812, the supplicant 802 can derive a first pairwise transit key (PTK). The supplicant 802 can further derive and AID specific secure scrambling key for MU PPDUs and TB PPDUs (SSK_{Link N, AID}). At 814, the supplicant 802 can transmit an EAPOL-KEY message including the SNonce to the authenticator 804 with an optional message integrity check (MIC). At 816, the authenticator 804 can derive a second PTK. If needed the authenticator 804 can derive a group temporal key (GTK), an integrity group temporal key (IGTK), beacon integrity temporal key (BIGTK), and a wake-up radio integrity group temporal key (WIGTK). The authenticator 804 can further derive an AID specific secure scrambling key for MU PPDUs and TB PPDUs (SSK_{Link N, AID}). If needed generate a link & PPDU specific secure scrambling key (SSKLink N, PPDU M). At 818, the authenticator 804 can transmit an EAPOL-Key message that includes the initial PTK, MIC, wrapped IGTK, wrapped BIGTK, wrapped WIGTK, and the link & PPDU specific secure scrambling key (SSKLink N, PPDU M). At 820, the supplicant 802 can transmit an EAPOL-Key message including the MIC. At 822, the supplicant 802 can install the PTK, GTK, IGTK BIGTK, and the WIGTK. At 824, the authenticator 804 can install the PTK, GTK, IGTK BIGTK, and the WIGTK. Upon installation by the authenticator a control port can be considered unblocked at 826

Currently, in the four-way handshake the AP and STA setup keys to encrypt individually addressed frames and group addressed frames Individual addressed frames have a unique symmetric key that is used in AP and STA. This key is derived in the four-way handshake. The group addressed frames have the same key that is transmitted by the AP to all STAs. In order to have successful probe requests, stations transmitting them should have rates supported by the network which they wish to join. Hence the service set identifier (SSID) of the network should be included in the probe request frame. Therefore, some embodiments herein are directed to common key for all PPDUs transmitted to AP or to STA in NAN is signaled in message 3 (step 818) by using key data encapsulation (KDE). AID specific key for unicast transmissions secure scrambling is derived from PMKID information similarly as the peer-wise transient key (PTK).

Authentication signaling can contain separate KDE for an AP key that is common for all STAs (e.g., an AP key for all SU PPDU transmissions). Using a common AP key ensures that all STAs have the same key. The KDE format can be used in the four-way handshake, as described above, to signal that the scrambler key is a common key for AP or STA. The KDE can be used to signal the encryption mechanism for the data payload. The content of the KDE may be encrypted and only receivable to the supplicant and authenticator. An organization unique identifier (OUI) can be set to the 00-0F-AC MAC address. Data Type field values associated with a OUI can indicate the encryption key type. For secure scramblers this can be set to 16.

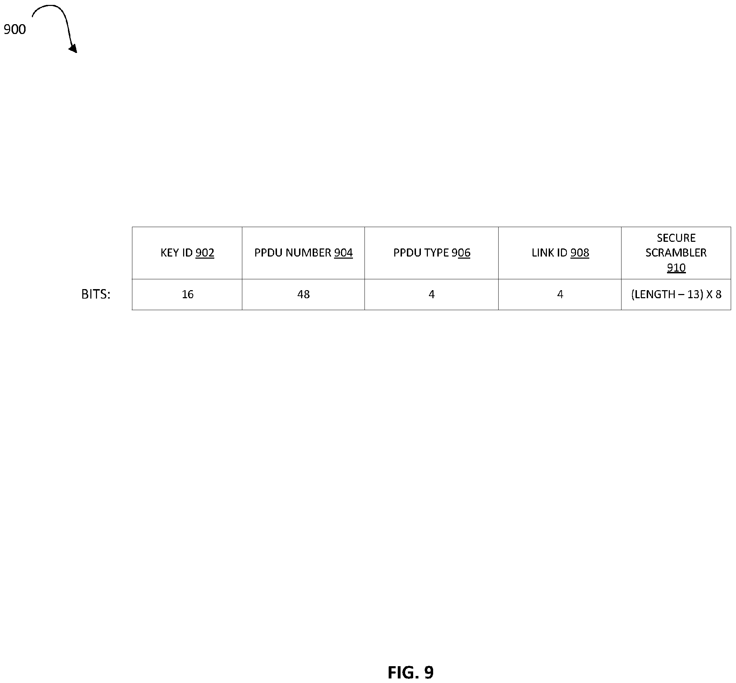

Figure 9 is table 900 for signaling for common AP or STA keys based on PPDU type, according to one or more embodiments. As illustrated, a frame can include a key ID field having sixteen bits, a PPDU number field 904 having forty-eight bits, a PPDU type field having four bits, a link ID field 908 having four bits, and secure scrambler field having (length-13) x 8 bits. The bits values in each field can be associated with various indications. For example, if the sixteen bits for key ID 902 have a value of eleven, the key can be for a legacy scrambler. If the sixteen bits for key ID 902 have a value of twelve, the key can be for a 2-octet secure scrambler. If the sixteen bits for key ID 902 have a value of thirteen, the key can be for a 4-octet secure scrambler. If the sixteen bits for key ID 902 have a value of fourteen, the key can be for a 6-octet secure scrambler. If the four bits for PPDU type 906 have a value of zero, the PPDU can be a SU PPDU (UL or all). If the four bits for PPDU type 906 have a value of one, the PPDU can be a SU PPDU (DL). If the four bits for PPDU type 906 have a value of two, the PPDU can be a MU PPDU (UL or all). If the four bits for PPDU type 906 have a value of three, the PPDU can be an MU PPDU (DL) with individual AID value. If the four bits for PPDU type 906 have a value of four, the PPDU can be a HE PPDU (UL or all). If the four bits for PPDU type 906 have a value of five, the PPDU can be a HE PPDU with individual AID value. If the four bits for PPDU type 906 have a value of six, the PPDU can be a HE or EHT MU PPDU with AID value 0. If the four bits for PPDU type 906 have a value of seven, the PPDU can be a HE or EHT MU PPDU with AID value 2045. If the four bits for PPDU type 906 have a value of eight, the PPDU can be a HE or EHT MU PPDU with AID value 2047. If the four bits for PPDU type 906 have a value of nine to sixteen, the indication can be reserved to be determined later.

Authentication signaling may contain separate KDE for the AP key that is common for all STAs. For instance, a common AP key can be used for all SU PPDU transmissions. This can ensure that all STAs have the same key for use. The Key Id 902 can be the identifier for the scrambler key. There is separate Key Id/selector for scrambler key based on a length of 7 bits, 2 octets, 4 octets or 6 octets. The Key ID can be set to the next available value. The PPDU number 904 can the first PPDU number transmitted with the key. The PPDU type 906 can be the type of PPDU to which the scrambler key is applied. The Link ID 1108 can be the link to which the key is deployed. An AP multi-link device (MLD) may have multiple links, each link may have a separate scrambler key. The secure scrambler key 910 can be the value of the key.

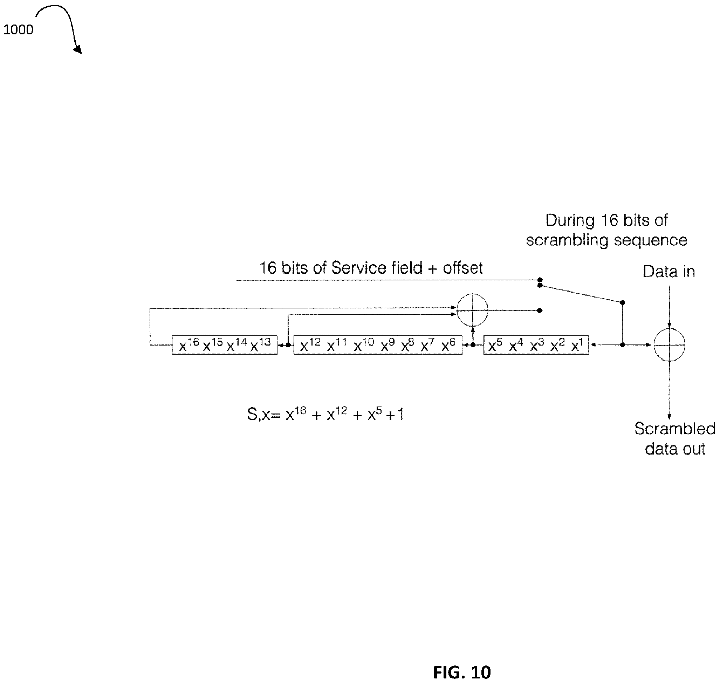

Figure 10 is an illustration of sixteen-bit secure scrambler 1000, according to one or more embodiments. The sixteen-bit secure scrambler 1000 can take sixteen bits (e.g., long PPDU number) as an input and generate a scrambled bit stream to obfuscate the payload of a frame, including the MAC header. The sixteen-bit secure scrambler 1000 uses a scrambling function as indicated by IEEE standards. It should be appreciated that although a sixteen-bit (2-octet) secure scrambler 1000 is illustrated, the embodiments herein can implement a 2-octet, 4-octet, 6-octet, and 8-octet secure scrambler.

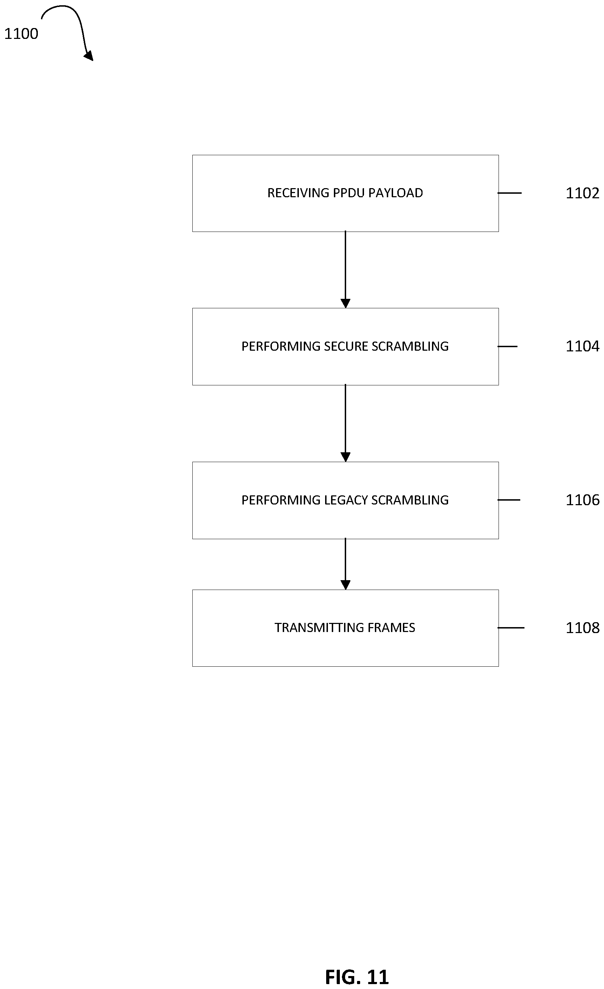

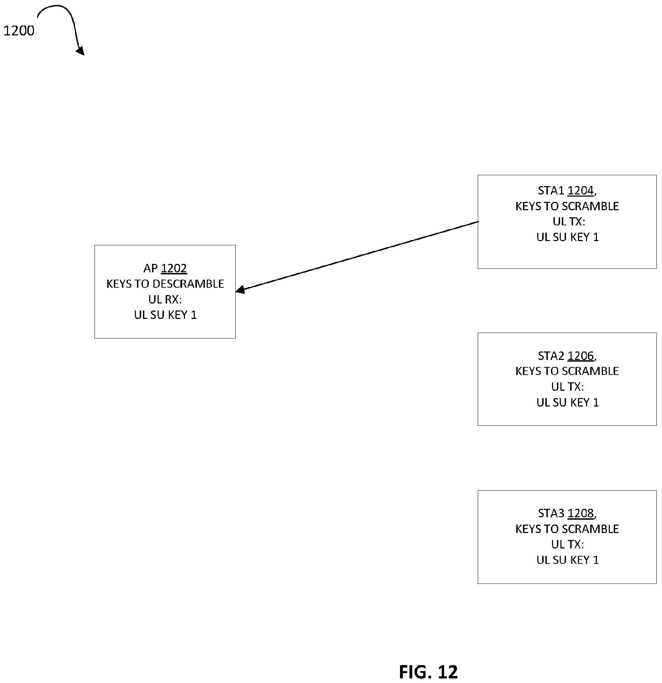

Figure 11 is a table 1100 describing the number of keys in secure scrambling, according to one or more embodiments. A device can identify a PPDU type based on reading the elements of a frame. For various reasons, the payload obfuscation may complicate the frame reception and the PPDU type may not be readily ascertainable. Without knowing the PPDU type, a device may be unable to retrieve the correct key for de-obfuscation. Additionally, if an association ID (AID) is not readily ascertainable, it can be difficult to discover the intended receiver device. This can hinder communication when communicating with multiple devices. One approach 1202 is that a device (e.g., an AP) can use one key for transmitting to all other devices. For example, all other devices (STAs) use the same key for all UL frames. Each other device, in turn, has their own device-specific key for transmitting to the device (e.g., AP). Another approach 1204 is for a device (e.g., AP) to have separate keys for transmitting to each other. In turn, each other device uses the same key for transmitting to the device (e.g., AP). These scenarios are illustrated with respect to Figures 12-14.

Figure 12 is an illustration 1200 for secure scrambling offsets of UL SU, according to one or more embodiments. For UL transmissions, the AP 1202 can detect a transmitting device and receiving device. However as illustrated in Figure 12, the AP 1202 cannot determine whether the transmission is received from STA1 1204, STA2 1206, or STA3 1206. Therefore, if an STA sends a SU frame to the AP 1202, the AP 1402 may not be able to detect the addresses. Therefore, the AP 1203 can assign the same key to all of the STAs. As illustrated each STA (e.g., STA1 1204, STA2 1206, and STA3 1208) has the same keys to scramble and the same UL SU offset 1. Therefore, STA 1 1202 can scramble the transmission using the keys to scramble and the UL SU offset 1 and transmit the message to the AP 1202. The AP 1202 can receive the message from STA1 and use keys to descramble and the UL SU offset 1 to descramble the message, regardless of not knowing which STA sent the transmission. If the payload matches with frame check sequence (FCS), the AP 1202 can receive the frame. If the payload does not match the FCS, the frame can be discarded. In some embodiments, the AP 1202 can have the additional capability to be able to detect the payload, even if it has assigned several offsets. For instance, the AP 1202 may be able to detect the payload on eight shared offsets that it has assigned.

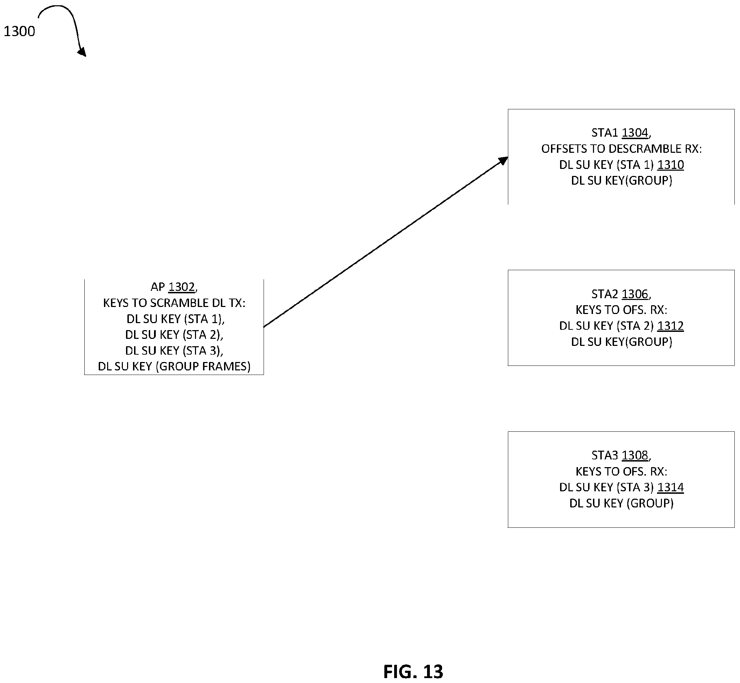

Figure 13 is an illustration 1300 for secure scrambling offsets of DL SU, according to one or more embodiments. For DL transmissions, the AP 1302 can use a device (STA) specific key. However, in this instance, each STA (e.g., STA1 1304, STA2 1306, STA3 1308) can only receive the payload assigned to itself or a group addressed frame. As illustrated, each STA can have a separate offset (e.g., DL SU offset (STA1) 1310, DL SU offset (STA2) 1312, DL SU offset (STA3) 1314) to be used for individually addressed DL SU PPDU reception. A STA can receive a transmission without an ascertainable AID. Therefore, the STA may not be able to detect who the transmission is for. Therefore, the STA can attempt to descramble the message using the STA's DL SU offset. If the payload matches with the FCS, the STA can receive the frame. If the payload does not match the FCS, the STA can discard the message. This ensures that the correct STA may receive the DL transmissions. The group frames may have a separate key that for group addressed SU PPDU obfuscation. The same group offset value can be used for all STAs in a BSS.

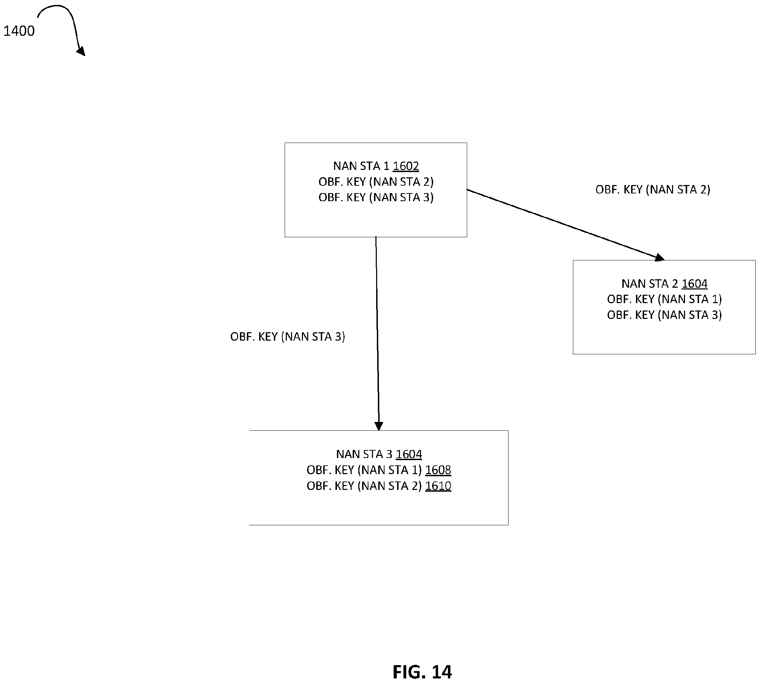

Figure 14 is an illustration 1400 for secure scrambling offsets in neighborhood area network (NAN)/Mesh networks, according to one or more embodiments. In NAN networks and Mesh networks an STA (e.g., NAN STA1 1402) may have link setup with multiple other STAs (e.g., NAN STA2 1404, NAN STA3 1406). In some situations, multiple NAN STAs can transmit to the same NAN STA. Furthermore, each NAN STA1 can be configured with a different obfuscation offset. For example, both NAN STA1 1402 and NAN STA2 1404 can transmit to NAN STA3 1406. Therefore, each NAN STA can be configured with the obfuscation offsets for both other NAN STAs. When a NAN STA detects a reception, the NAN.

STA can de-scramble the MAC addresses by using the appropriate scrambling offset. This simplifies frame reception but can require storing of multiple peer offsets.

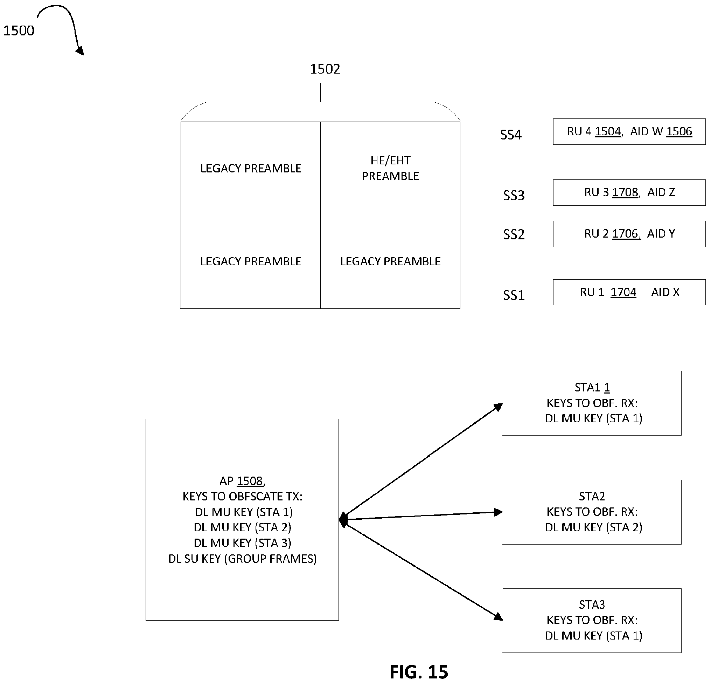

Figure 15 is an illustration 1500 for secure scrambling key for MU PPDU, according to one or more embodiments. For an MU PPDU, an AP is transmitting to multiple STAs. The frame can include a preamble 1502, and in particular the HE/EHT preamble, which can define the resource unit (RU) 1504 for carrying the frame, where each RU is a group of bandwidth carriers for UL and DL transmissions. The preamble can also define the AID 1506 that indicates the intended recipient of the frame. For each RU, a service field (e.g., short PPDU number) or extended service field (e.g., long PPDU number) can be included. For MU PPDU, the recipient and scrambling type are indicated with obfuscation. Therefore, an AP 1508 can be configured with multiple STA-specific DL MU keys and transmit frames to multiple STAs (e.g., STA1, STA2, and STA3) using respective DL MU keys to obfuscate the frames. In turn, each STA can use detect the AID and determine whether it should receive the frame. If a STA determines that it is the intended recipient, it can try the RU and determine whether the payload matches with FCS. If there is a match the STA can receive the frame, if there is no match, the STA can discard the frame. It should be noted that if the frame is transmitted by a STA in OBSS, the descrambling can fail. In some embodiments, the DL SU key and DL MU key can have the same value, or STA may only have one key for them both.

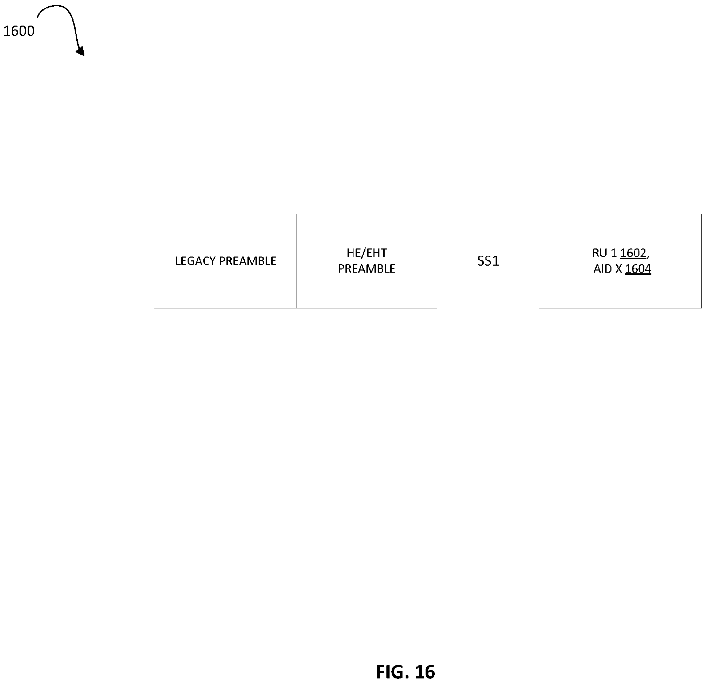

Figure 16 is an illustration 1600 of using MU PPDU for UL transmissions, according to one or more embodiments. As illustrated a STA can use a UL MU PPDU to transmit to an AP. Generally, only a single RU 1602 is used for this transmission. The UL MU PPDU can carry the AID X 1604, and the AID X 1604 can be used by the AP to detect the transmitting device. This scheme allows for the STA to use STA specific scrambling keys. The AP can detect the transmitting STA from the AID and can apply the correct scrambling key to descramble the payload. In some embodiments, a network can send a command for all UL data frames to be sent in MU PPDUs. This can ensure that all the transmitted data is securely scrambled. A BSS can also adopt a rule that when the payload is transmitted, MU PPDU is used, if the payload is greater than a threshold number of octets or if the payload transmission during is longer than a threshold time.

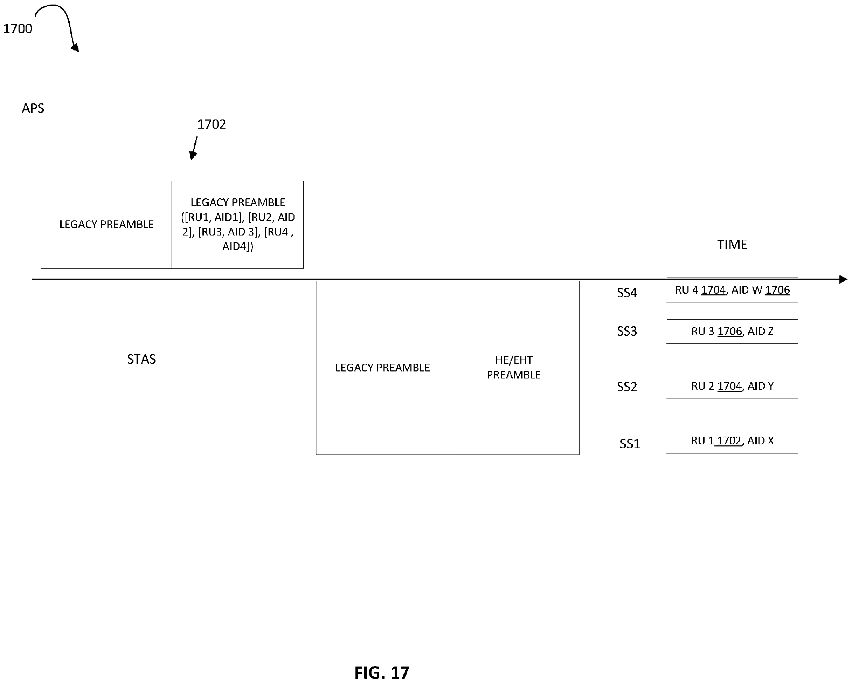

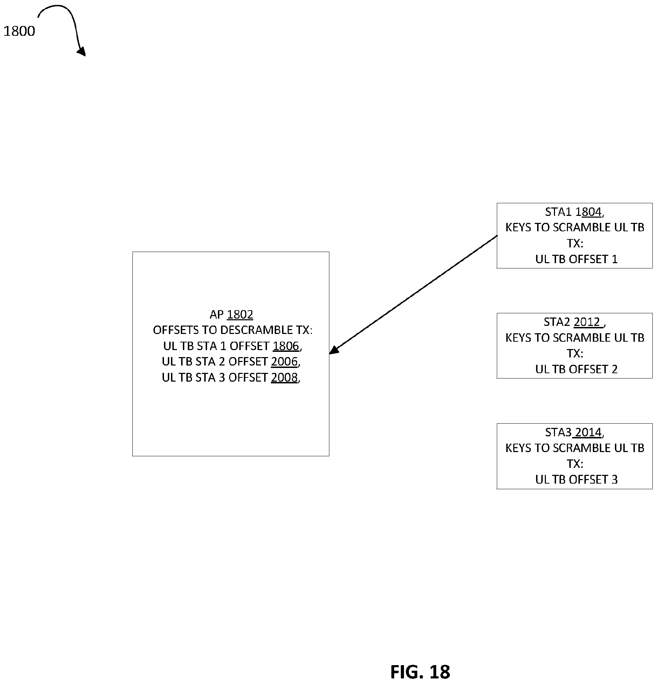

Figure 17 is an illustration 1700 for secure scrambling offsets of triggered PPDU, according to one or more embodiments. The AP can transmit a trigger frame 1702, which can indicate the respective RU 1704, and AID 1706. Upon reception, a STA can determine whether it has been allocated an RU based on the trigger frame 1702. If the STA has been allocated an RU, it can transmit on the RU. The respective service filed values can be used as an RU specific PPDU number. The PPDU type (e.g., SU or MU) specific address detection can be performed with respect to trigger frame addresses. The AP can assume that if the triggered STA will respond, and the AP can apply the offset of the triggered STA. Figure 18 is an illustration 1800 for secure scrambling offsets of triggered PPDU, according to one or more embodiments. An AP can transmit a trigger frame that is received by a STA (e.g., STA1 1804). The AP 1802 can further be configured to store respective offsets for multiple STAs. The AP 1802 can assume that STA1 1804 will read the AID in the trigger frame and use the allocated RU to respond. The AP can further use the stored UL TP STA1 offset 1806 to descramble the response.

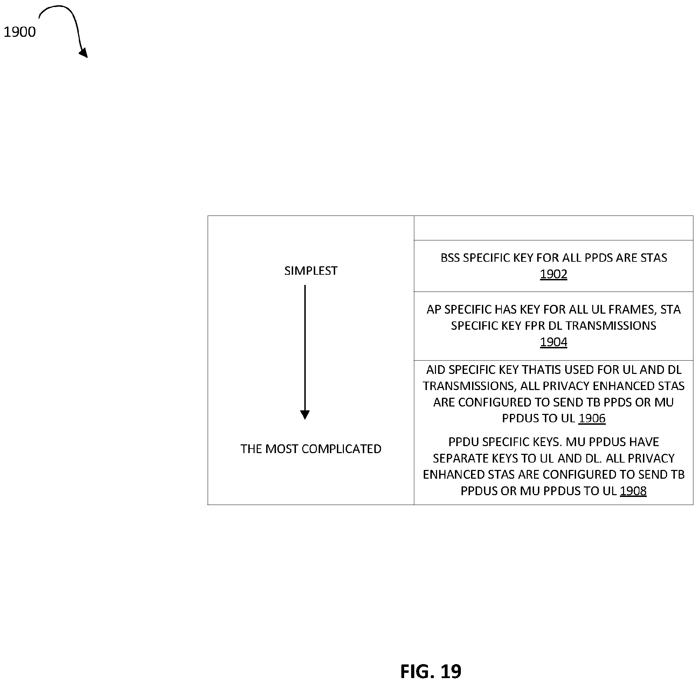

Figure 19 is a table 1900 for example configurations of the scrambling keys, according to one or more embodiments. The table 1900 moves from simplest configuration to most complicated configuration in descending order. As illustrated, the simplest configuration can include BSS specific key for all PPDUs are STAs 1902. The second simplest configuration can include that the AP specific has key for all UL frames, STA specific key for all DL transmissions 1904. The next simplest configuration includes an AID specific key that is used for UL and DL transmissions. AP specific key for all SU PPDU transmissions. All privacy enhanced STAs are configured to send TB PPDUs or MU PPDUs to UL 1906. The next simplest configuration includes PPDU specific keys. MU PPDUs have separate keys to UL and DL. All privacy enhanced STAs are configured to send TB PPDUs or MU PPDUs to UL 1908.

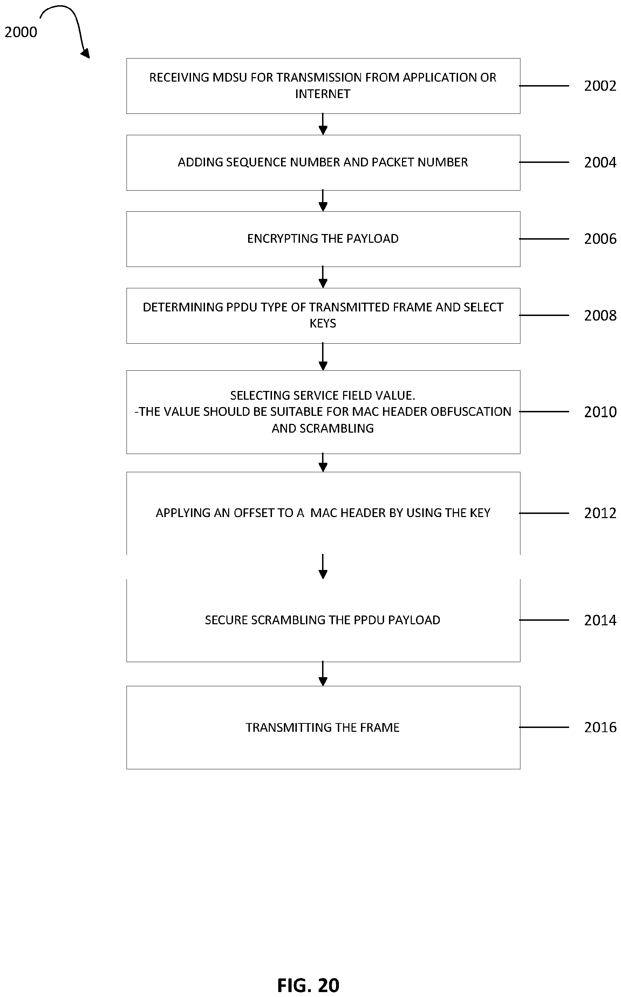

Figure 20 is a process flow 2000 for MAC header offset handling at a transmitting device, according to one or more embodiments. At 2002, the method can include a transmitting device receiving a MAC unit service data unit (MDSU) from an application or the internet. The MSDU can be a layer 3-7 payload of an 802.11 data frame. At 2004, the method can include the transmitting device adding an SN and PN, which can be used as a salt for hashing function. At 2006, the method can include the transmitting device encrypting the payload. For example, the transmitting device can apply an encryption algorithm to encrypt a payload. At 2008, the method can include the transmitting device determining a PPDU type of the transmitted frame and select obfuscation keys. At 2010, the method can include the transmitting device selecting a service field value, where the value should be suitable for MAC header obfuscation and scrambling. At 2012, the method can include the transmitting device applying an offset to the MAC headers by using the PPDU specific key. At 2014, the method can include the transmitting device secure scrambling the PPDU payload. At 2016, the method can include the transmitting device transmitting the frame.

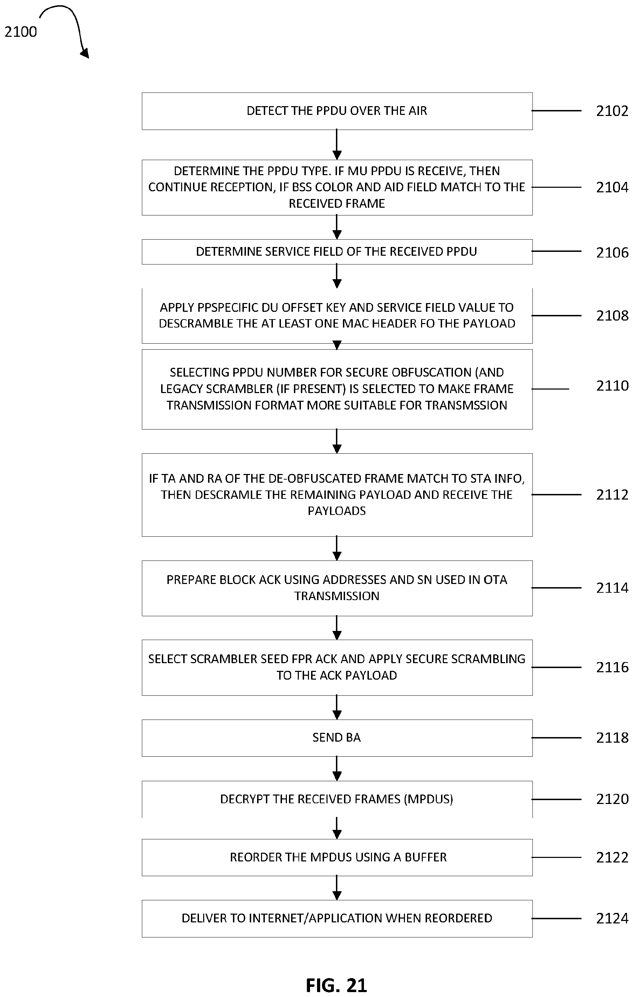

Figure 21 is a process flow 2100 for MAC header offset handling at a receiving device, according to one or more embodiments. At 2102, the method can include a receiving device detecting a PPDU over the air. At 2104, the method can include the receiving device determine the PPDU type. If the PPDU is an MU PPDU, the receiving device can continue reception if the BSS color and AID field match the received frame. At 2106, the method can include the receiving device determining the service field of the received PPDU. At 2108, the method can include the receiving applying PPDU specific offset key and service field value to descramble the at least one MAC header for the payload. At 2110, the method can include the receiving device applying the MAC header address de-obfuscation. At 2112, the method can include descrambling the remaining payload and receiving the payloads, if the transmitter address (TA) and receiver address (RA) of the de-obfuscated frame match the STA info. At 2114, the method can include the receiving device preparing block ACK using addresses and SN used in OTA transmission. At 2116, the method can include the receiving device selecting scrambler see for ACK and applying secure scrambling to the ACK payload. At 2118, the method can include the receiving device sending a BA. At 2120, the method can include the receiving device decrypting the received frame (MPDUs). At 2122, the method can include the receiving device re-ordering the MPDUs using a buffer. At 2124, the method can include the receiving device delivering to the internet/application when re-ordered.

The scrambling operation is part of the frame transmission process. No new operation is added to transmitted frames. The operation is fast to perform. The secure scrambling may be combined with other MAC address obfuscation mechanisms. The multiple levels of obfuscation improve the randomization/privacy of the STAs. The secure scrambling is super easy mechanism for improved privacy. No field specific operation, just modification of a single function.

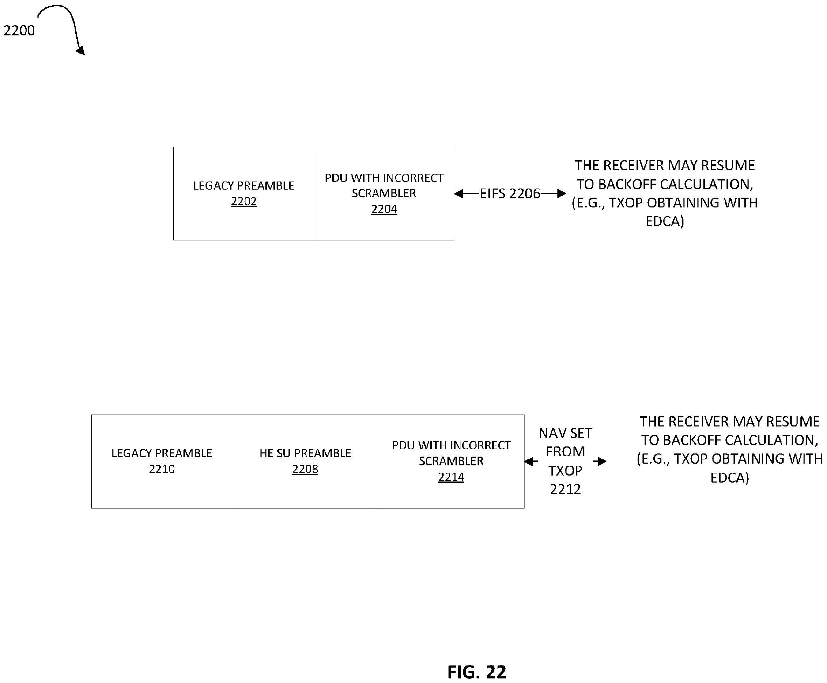

Figure 22 is an illustration 2200 of legacy STA receiving a PPDU with a secure scrambler, according to one or more embodiments. In one embodiment, a receiving device can detect an ongoing frame, and read the legacy preamble 2202 for an indication of the length of the frame. The receiving device can attempt to descramble the frame. In the event that the PPDU 2204 cannot be descrambled, the receiving device can wait for a period of time based on an error interframe space (EIFS) 2206. Once the time has expired, the receiving device can resume attempt to receive a transmission. This is performed to protect an acknowledge that is generally issued after the frame. In another embodiment, a HE SU preamble 2208 can be added to the legacy preamble 2210. The HE SU preamble can include a TXOP 2212 that can indicate an estimate of a time that a transmitting device will continue to transmit, which can be a time that the receiving device can wait if it receives an incorrect PPDU 2214 transmission. Each embodiment describes a penalty for a failed attempt to descramble a PPDU. Currently, scrambler errors can occur only if the receiving device has received incorrectly the scrambling seed. If the payload is incorrectly descrambled, the receiving device has received the preamble, but failed to receive any payload.

For one or more embodiments, at least one of the components set forth in one or more of the preceding figures may be configured to perform one or more operations, techniques, processes, or methods as set forth in the example section below.

Any of the above-described examples may be combined with any other example (or combination of examples), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Although specific embodiments have been described, various modifications, alterations, alternative constructions, and equivalents are also encompassed within the scope of the disclosure. Embodiments are not restricted to operation within certain specific data processing environments but are free to operate within a plurality of data processing environments. Additionally, although embodiments have been described using a particular series of transactions and steps, it should be apparent to those skilled in the art that the scope of the present disclosure is not limited to the described series of transactions and steps. Various features and aspects of the above-described embodiments may be used individually or jointly.

Further, while embodiments have been described using a particular combination of hardware and software, it should be recognized that other combinations of hardware and software are also within the scope of the present disclosure. Embodiments may be implemented only in hardware, or only in software, or using combinations thereof. The various processes described herein can be implemented on the same processor or different processors in any combination. Accordingly, where components or modules are described as being configured to perform certain operations, such configuration can be accomplished, e.g., by designing electronic circuits to perform the operation, by programming programmable electronic circuits (such as microprocessors) to perform the operation, or any combination thereof. Processes can communicate using a variety of techniques, including but not limited to conventional techniques for inter process communication, and different pairs of processes may use different techniques, or the same pair of processes may use different techniques at different times.

The specification and drawings are, accordingly, to be regarded in an illustrative rather than a restrictive sense. It will, however, be evident that additions, subtractions, deletions, and other modifications and changes may be made. Thus, although specific disclosure embodiments have been described, these are not intended to be limiting. The scope of the present invention is defined by the following claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments and does not pose a limitation on the scope of the disclosure unless otherwise claimed. No language in the specification should be construed as indicating any non-claimed element as essential to the practice of the disclosure.

Disjunctive language such as the phrase "at least one of X, Y, or Z," unless specifically stated otherwise, is intended to be understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Preferred embodiments of this disclosure are described herein, including the best mode known for carrying out the disclosure. Variations of those preferred embodiments may become apparent to those of ordinary skill in the art upon reading the foregoing description. Those of ordinary skill should be able to employ such variations as appropriate and the disclosure may be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

All references, including publications, patent applications, and patents, cited herein are hereby incorporated by reference to the same extent as if each reference were individually and specifically indicated to be incorporated by reference and were set forth in its entirety herein.

In the foregoing specification, aspects of the disclosure are described with reference to specific embodiments thereof, but those skilled in the art will recognize that the disclosure is not limited thereto. Various features and aspects of the above-described disclosure may be used individually or jointly. Further, embodiments can be utilized in any number of environments and applications beyond those described herein. The specification and drawings are, accordingly, to be regarded as illustrative rather than restrictive.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

## Claims

1. A method, comprising:
by a first communication device:
encrypting a payload to be included in a physical layer protocol data unit, PPDU, frame;
determining a PPDU frame type based at least in part on an association with a second communication device, wherein the PPDU frame type is included in a medium access control, MAC, header of the PPDU frame;
selecting a key based at least in part on the association with second communication device, wherein the key is a scrambling key (910) that is associated with a different PPDU number;
selecting a PPDU number for obfuscation of a field of the MAC header of the PPDU frame;
obfuscating the field of the MAC header;
scrambling the encrypted payload using a service field value; and
transmitting the PPDU frame to the second communication device.

2. The method of claim 1, wherein the association comprises an exchange of one or more configuration parameters between the first communication device and the second communication device.

3. The method of claim 1, wherein obfuscating the field of the MAC header comprises randomizing the payload using a hash function based on the service field value.

4. The method of claim 1, further comprising signaling a scrambling capability to the second communication device.

5. The method of claim 1, wherein the method further comprises:
receiving a MAC service data unit, MDSU, comprising the payload; and
adding a sequence number, SN, and a packet number, PN, to the payload.

6. The method of claim 1, wherein the method further comprises applying an offset (402, 404, 1806) to the MAC header based on the selected key.

7. The method of claim 1, wherein the service field value comprises at least two octets.

8. A first communication device, comprising:
one or more processors; and
one or more computer-readable media including instructions that, when executed by the one or more processors, cause the one or more processors to:
encrypt a payload to be included in a physical layer protocol data unit, PPDU, frame;
determine a PPDU frame type based at least in part on an association with a second communication device, wherein the PPDU frame type is included in a medium access control, MAC, header of the PPDU frame;
select a key based at least in part on the association with second communication device, wherein the key is a scrambling key (910) that is associated with a different PPDU number;
select a PPDU number for obfuscation of a field of the MAC header of the PPDU frame;
obfuscate the field of the MAC header;
scramble the encrypted payload using a service field value; and
transmit the PPDU frame to the second communication device.

9. The first communication device of claim 8, wherein the association comprises an exchange of one or more configuration parameters between the first communication device and the second communication device.

10. The first communication device of claim 8, wherein obfuscating the field of the MAC header comprises randomizing the payload using a hash function based on the service field value.

11. The first communication device of claim 8, further comprising signaling a scrambling capability to the second communication device.

12. The first communication device of claim 8, wherein the instructions that, when executed by the one or more processors, further cause the one or more processors to:
receive a MAC service data unit, MDSU, comprising the payload; and
add a sequence number, SN, and a packet number, PN, to the payload.

13. One or more non-transitory, computer-readable media having stored thereon a sequence of instructions which, when executed, cause one or more processors to:
encrypt a payload to be included in a physical layer protocol data unit, PPDU, frame;
determine a PPDU frame type based at least in part on an association with a second communication device, wherein the PPDU frame type is included in a medium access control, MAC, header of the PPDU frame;
select a key based at least in part on the association with second communication device, wherein the key is a scrambling key (910) that is associated with a different PPDU number;
select a PPDU number for obfuscation of a field of the MAC header of the PPDU frame;
obfuscate the field of the MAC header;
scramble the encrypted payload using a service field value; and
transmit the PPDU frame to the second communication device.

14. The one or more non-transitory, computer-readable media of claim 13, wherein the association comprises an exchange of one or more configuration parameters between the first communication device and the second communication device.

15. The one or more non-transitory, computer-readable media of claim 13, wherein obfuscating the field of the MAC header comprises randomizing the payload using a hash function based on the service field value.

## Patentansprüche

1. Verfahren, aufweisend:
durch eine erste Kommunikationsvorrichtung:
Verschlüsseln einer Nutzlast, die in einen Physical-Layer-Protocol-Data-Unit-, PPDU-, Rahmen aufzunehmen ist;
Bestimmen eines PPDU-Rahmentyps basierend zumindest teilweise auf einer Assoziation mit einer zweiten Kommunikationsvorrichtung, wobei der PPDU-Rahmentyp in einem Medium-Access-Control-, MAC-, Header des PPDU-Rahmens enthalten ist;
Auswählen eines Schlüssels basierend zumindest teilweise auf der Assoziation mit der zweiten Kommunikationsvorrichtung, wobei der Schlüssel ein Verschlüsselungsschlüssel (910) ist, der mit einer anderen PPDU-Nummer assoziiert ist;
Auswählen einer PPDU-Nummer zur Verschleierung eines Feldes des MAC-Headers des PPDU-Rahmens;
Verschleiern des Feldes des MAC-Headers;
Verschlüsseln der verschlüsselten Nutzlast unter Verwendung eines Dienstfeldwerts; und
Übertragen des PPDU-Rahmens an die zweite Kommunikationsvorrichtung.

2. Verfahren nach Anspruch 1, wobei die Zuordnung einen Austausch von einem oder mehreren Konfigurationsparametern zwischen der ersten Kommunikationsvorrichtung und der zweiten Kommunikationsvorrichtung aufweist.

3. Verfahren nach Anspruch 1, wobei das Verschleiern des Feldes des MAC-Headers ein Randomisieren der Nutzlast unter Verwendung einer Hash-Funktion basierend auf dem Dienstfeldwert aufweist.

4. Verfahren nach Anspruch 1, ferner aufweisend ein Signalisieren einer Verwürfelungsfähigkeit an die zweite Kommunikationsvorrichtung.

5. Verfahren nach Anspruch 1, wobei das Verfahren ferner aufweist:
Empfangen einer MAC-Dienstdateneinheit, MDSU, die die Nutzlast aufweist; und
Hinzufügen einer Sequenznummer, SN, und einer Paketnummer, PN, zu der Nutzlast.

6. Verfahren nach Anspruch 1, wobei das Verfahren ferner ein Anwenden eines Versatzes (402, 404, 1806) auf den MAC-Header basierend auf dem ausgewählten Schlüssel aufweist.

7. Verfahren nach Anspruch 1, wobei der Dienstfeldwert wenigstens zwei Oktette aufweist.

8. Erste Kommunikationsvorrichtung, aufweisend:
einen oder mehrere Prozessoren; und
ein oder mehrere computerlesbare Medien, die Anweisungen aufweisen, die, wenn sie durch den einen oder die mehreren Prozessoren ausgeführt werden, den einen oder die mehreren Prozessoren veranlassen zum:
Verschlüsseln einer Nutzlast, die in einen Physical-Layer-Protocol-Data-Unit-, PPDU-, Rahmen aufzunehmen ist;
Bestimmen eines PPDU-Rahmentyps basierend zumindest teilweise auf einer Assoziation mit einer zweiten Kommunikationsvorrichtung, wobei der PPDU-Rahmentyp in einem Medium-Access-Control-, MAC-, Header des PPDU-Rahmens enthalten ist;
Auswählen eines Schlüssels basierend zumindest teilweise auf der Assoziation mit der zweiten Kommunikationsvorrichtung, wobei der Schlüssel ein Verschlüsselungsschlüssel (910) ist, der mit einer anderen PPDU-Nummer assoziiert ist;
Auswählen einer PPDU-Nummer zur Verschleierung eines Feldes des MAC-Headers des PPDU-Rahmens;
Verschleiern des Feldes des MAC-Headers;
Verschlüsseln der verschlüsselten Nutzlast unter Verwendung eines Dienstfeldwerts; und
Übertragen des PPDU-Rahmens an die zweite Kommunikationsvorrichtung.

9. Erste Kommunikationsvorrichtung nach Anspruch 8, wobei die Zuordnung einen Austausch von einem oder mehreren Konfigurationsparametern zwischen der ersten Kommunikationsvorrichtung und der zweiten Kommunikationsvorrichtung aufweist.

10. Erste Kommunikationsvorrichtung nach Anspruch 8, wobei das Verschleiern des Feldes des MAC-Headers ein Randomisieren der Nutzlast unter Verwendung einer Hash-Funktion basierend auf dem Dienstfeldwert aufweist.

11. Erste Kommunikationsvorrichtung nach Anspruch 8, ferner aufweisend ein Signalisieren einer Verwürfelungsfähigkeit an die zweite Kommunikationsvorrichtung.

12. Erste Kommunikationsvorrichtung nach Anspruch 8, wobei die Anweisungen, wenn sie durch den einen oder die mehreren Prozessoren ausgeführt werden, ferner den einen oder die mehreren Prozessoren veranlassen zum:
Empfangen einer MAC-Dienstdateneinheit, MDSU, die die Nutzlast aufweist; und
Hinzufügen einer Sequenznummer, SN, und einer Paketnummer, PN, zu der Nutzlast.

13. Ein oder mehrere nichtflüchtige computerlesbare Medien, auf denen eine Sequenz von Anweisungen gespeichert ist, die, wenn sie ausgeführt werden, einen oder mehrere Prozessoren veranlassen zum:
Verschlüsseln einer Nutzlast, die in einen Physical-Layer-Protocol-Data-Unit-, PPDU-, Rahmen aufzunehmen ist;
Bestimmen eines PPDU-Rahmentyps basierend zumindest teilweise auf einer Assoziation mit einer zweiten Kommunikationsvorrichtung, wobei der PPDU-Rahmentyp in einem Medium-Access-Control-, MAC-, Header des PPDU-Rahmens enthalten ist;
Auswählen eines Schlüssels basierend zumindest teilweise auf der Assoziation mit der zweiten Kommunikationsvorrichtung, wobei der Schlüssel ein Verschlüsselungsschlüssel (910) ist, der mit einer anderen PPDU-Nummer assoziiert ist;
Auswählen einer PPDU-Nummer zur Verschleierung eines Feldes des MAC-Headers des PPDU-Rahmens;
Verschleiern des Feldes des MAC-Headers;
Verschlüsseln der verschlüsselten Nutzlast unter Verwendung eines Dienstfeldwerts; und
Übertragen des PPDU-Rahmens an die zweite Kommunikationsvorrichtung.

14. Ein oder mehrere nichtflüchtige computerlesbare Medien nach Anspruch 13, wobei die Zuordnung einen Austausch von einem oder mehreren Konfigurationsparametern zwischen der ersten Kommunikationsvorrichtung und der zweiten Kommunikationsvorrichtung aufweist.

15. Ein oder mehrere nichtflüchtige computerlesbare Medien nach Anspruch 13, wobei das Verschleiern des Feldes des MAC-Headers ein Randomisieren der Nutzlast unter Verwendung einer Hash-Funktion basierend auf dem Dienstfeldwert aufweist.

## Revendications

1. Un procédé comprenant :
par un premier dispositif de communication :
le chiffrement d'une charge utile à inclure dans une trame d'unité de données en protocole de couche physique, PPDU ;
la détermination d'un type de trame PPDU au moins en partie sur la base d'une association avec un second dispositif de communication, le type de trame PPDU étant inclus dans un en-tête de contrôle d'accès au support, MAC, de la trame PPDU ;
la sélection d'une clé au moins en partie sur la base de l'association avec le second dispositif de communication, la clé étant une clé de brouillage (910) qui est associée à un numéro de PPDU différent ;
la sélection d'un numéro de PPDU pour opacification d'un champ de l'en-tête MAC de la trame PPDU ;
l'opacification du champ de l'en-tête MAC ;
le brouillage de la charge utile chiffrée en utilisant une valeur de champ de service ; et
la transmission de la trame PPDU au second dispositif de communication.

2. Le procédé de la revendication 1, dans lequel l'association comprend un échange d'un ou plusieurs paramètres de configuration entre le premier dispositif de communication et le second dispositif de communication.

3. Le procédé de la revendication 1, dans lequel l'opacification du champ de l'en-tête MAC comprend la randomisation de la charge utile en utilisant une fonction de hachage basée sur la valeur de champ de service.

4. Le procédé de la revendication 1, comprenant en outre la signalisation d'une capacité de brouillage au second dispositif de communication.

5. Le procédé de la revendication 1, dans lequel le procédé comprend en outre :
la réception d'une unité de données de service MAC, MDSU, comprenant la charge utile ; et
l'ajout d'un numéro de séquence, SN, et d'un numéro de paquet, PN, à la charge utile.

6. Le procédé de la revendication 1, dans lequel le procédé comprend en outre l'application d'un décalage (402, 404, 1806) à l'en-tête MAC sur la base de la clé sélectionnée.

7. Le procédé de la revendication 1, dans lequel la valeur de champ de service comprend au moins deux octets.

8. Un premier dispositif de communication, comprenant :
un ou plusieurs processeurs ; et
un ou plusieurs supports lisibles par calculateur comprenant des instructions qui, lorsqu'elles sont exécutées par les un ou plusieurs processeurs, font en sorte que les un ou plusieurs processeurs :
chiffrent une charge utile à inclure dans une trame d'unité de données en protocole de couche physique, PPDU ;
déterminent un type de trame PPDU au moins en partie sur la base d'une association avec un second dispositif de communication, le type de trame PPDU étant inclus dans un en-tête de contrôle d'accès au support, MAC, de la trame PPDU ;
sélectionnent une clé au moins en partie sur la base de l'association avec le second dispositif de communication, la clé étant une clé de brouillage (910) qui est associée à un numéro de PPDU différent ;
sélectionnent un numéro de PPDU pour opacification d'un champ de l'en-tête MAC de la trame PPDU ;
opacifient le champ de l'en-tête MAC ;
brouillent la charge utile chiffrée en utilisant une valeur de champ de service ; et
transmettent la trame PPDU au second dispositif de communication.

9. Le premier dispositif de communication de la revendication 8, dans lequel l'association comprend un échange d'un ou plusieurs paramètres de configuration entre le premier dispositif de communication et le second dispositif de communication.

10. Le premier dispositif de communication de la revendication 8, dans lequel l'opacification du champ de l'en-tête MAC comprend la randomisation de la charge utile en utilisant une fonction de hachage basée sur la valeur de champ de service.

11. Le premier dispositif de communication de la revendication 8, comprenant en outre la signalisation d'une capacité de brouillage au second dispositif de communication.

12. Le premier dispositif de communication de la revendication 8, dans lequel les instructions, lorsqu'elles sont exécutées par les un ou plusieurs processeurs, font en outre en sorte que les un ou plusieurs processeurs :
reçoivent une unité de données de service MAC, MDSU, comprenant la charge utile ; et
ajoutent un numéro de séquence, SN, et un numéro de paquet, PN, à la charge utile.

13. Un ou plusieurs supports non transitoires lisibles par calculateur sur lesquels est stockée une séquence d'instructions qui, lorsqu'elles sont exécutées, font en sorte que les un ou plusieurs processeurs :
chiffrent une charge utile à inclure dans une trame d'unité de données en protocole de couche physique, PPDU ;
déterminent un type de trame PPDU au moins en partie sur la base d'une association avec un second dispositif de communication, le type de trame PPDU étant inclus dans un en-tête de contrôle d'accès au support, MAC, de la trame PPDU ;
sélectionnent une clé au moins en partie sur la base de l'association avec le second dispositif de communication, la clé étant une clé de brouillage (910) qui est associée à un numéro de PPDU différent ;
sélectionnent un numéro de PPDU pour opacification d'un champ de l'en-tête MAC de la trame PPDU ;
opacifient le champ de l'en-tête MAC ;
brouillent la charge utile chiffrée en utilisant une valeur de champ de service ; et
transmettent la trame PPDU au second dispositif de communication.

14. Les un ou plusieurs supports non transitoires lisibles par calculateur de la revendication 13, dans lesquels l'association comprend un échange d'un ou plusieurs paramètres de configuration entre le premier dispositif de communication et le second dispositif de communication.

15. Les un ou plusieurs supports non transitoires lisibles par calculateur de la revendication 13, dans lesquels l'opacification du champ de l'en-tête MAC comprend la randomisation de la charge utile en utilisant une fonction de hachage basée sur la valeur de champ de service.
